# EUROPÄISCHE PATENTSCHRIFT

(11) **EP 0 388 394 B1**
(45) Veröffentlichungstag und Bekanntmachung des Hinweises auf die Patenterteilung: **05.10.1994**
(21) Anmeldenummer: 90890028.5
(22) Anmeldetag: 08.02.1990
(51) Int. Cl.: C08G 73/10

(54) **Verfahren zur Herstellung von schwer entflammbaren, thermostabilen Homopolyimiden**
A method of producing flame-retardant thermostable homopolyimides
Procédé pour la préparation d'homopolyimides peu inflammables et thermostables

(30) Priorität: 15.02.1989 AT 336/89
(43) Veröffentlichungstag der Anmeldung: 19.09.1990
(73) Patentinhaber: Lenzing Aktiengesellschaft, A-4860 Lenzing (AT)
(72) Erfinder: Seidl, Sigrid, Dr., A-4863 Seewalchen (AT); Weinrotter, Klaus, Dr., A-4840 Vöcklabruck (AT); Griesser, Herbert, Dr., A-4840 Vöcklabruck (AT)
(74) Vertreter: Schwarz, Albin, Dr. Kopecky & Schwarz Patentanwälte

(56) Entgegenhaltungen:
- DE-C- 2 143 080
- US-A- 4 021 412
- CHEMICAL ABSTRACTS, Band 109, Nr. 4, 25. Juli 1988, Seite 54, ZusammenfassungNr. 24161y, Columbus, Ohio, US; K. WEINROTTER: "The best-stable flame-resistantpolyimide figer P84 as an asbestos substitute,& LENZINGER BER. 1988, 64, 24-8

## Beschreibung

Die Erfindung betrifft ein Verfahren zur Herstellung von neuen, schwer entflammbaren, thermostabilen Homopolyimiden mit Struktureinheiten der allgemeinen Formel 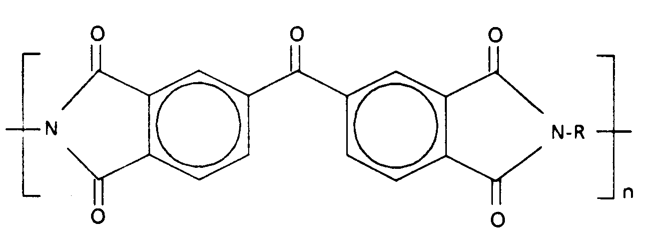
worin n eine ganze Zahl größer als 1 bedeutet und R für eine Gruppe der Formel(n) 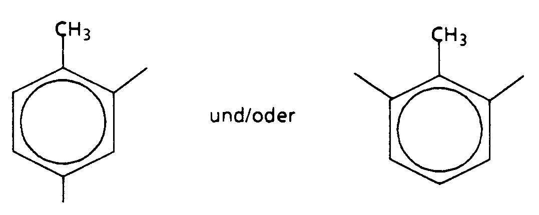
steht, durch Umsetzen von 3,3',4,4'-Benzophenontetracarbonsäuredianhydrid mit einer insgesamt äquimolaren Menge von 2,4- und/oder 2,6-Toluylendiisocyanat, sowie Formkörper und Fasern aus diesen Homopolyimiden.

Die Herstellung eines hitzebeständigen Polyimides aus 3,3',4,4'-Benzophenontetracarbonsäuredianhydrid (BTDA) und 4,4'-Methylen-bis-(phenylisocyanat) (MDI) ist seit längerem bekannt. Dieses Polyimid besitzt eine gute Strukturfestigkeit, weist aber einen relativ niedrigen Glasübergangspunkt auf, der sich nachteilig auf die Strukturfestigkeit bei höheren Temperaturen auswirkt. Außerdem kann dieses Polyimid nur schwierig bei erhöhter Temperatur zu Formkörpern verpreßt werden.

Aus der DE-C - 21 43 080 ist bekannt, daß die genannten Nachteile beseitigt werden können, wenn dem Polyimid ein bestimmter Anteil von wiederkehrenden Einheiten eines zweiten Polyimides einverleibt wird, indem ein Teil des MDI durch Toluylendiisocyanat (TDI) ersetzt wird, wobei ein Mischpolyimid entsteht.

Ein vollständiger Austausch des MDI wäre für eine noch bessere Hitzebeständigkeit wünschenswert, da in diesem Fall das Polyimidmolekül keine oxidationsempfindlichen Methylen-Gruppen mehr enthalten würde. Aus Beispiel 5 der DE-C - 21 43 080 ist aber bekannt, daß ein derartiges Homopolyimid, das lediglich aus BTDA und TDI hergestellt wird, eine schlechte Strukturfestigkeit besitzt. Formkörper, die durch Heißpressen eines derartigen Homopolyimid-Pulvers hergestellt werden, besitzen eine schlechte Zugfestigkeit, Dehnung und einen schlechten Modul, verglichen mit Formkörpern aus Mischpolyimiden. Außerdem ist der Anwendungsbereich noch zusätzlich eingeschränkt, da sich das genannte Homopolyimid nicht zu Fasern verarbeiten läßt. Lediglich die Glasübergangstemperatur liegt mit 315°C ebenso hoch wie jene der Mischpolyimide.

Aus all diesen Gründen wurde ein aus BTDA und TDI herstellbares Homopolyimid nicht als interessanter Werkstoff angesehen, so daß in der weiteren Entwicklung versucht wurde, die Herstellung der Mischpolyimide durch Zugabe von Polymerisationsbeschleunigern zu optimieren.

In der US-A - 4,021,412 wird beispielsweise beschrieben, daß Alkalimetallactamate die Bildung mancher Mischpolyimide katalysieren. Als Diisocyanatkomponenten werden MDI und TDI genannt. Der US-A - 4,156,065 ist zu entnehmen, daß gewisse vier- oder fünfgliedrige, zyklische Phosphorverbindungen ebenfalls eine katalytische Wirkung auf die Bildung der MDI/TDI-Mischpolyimide ausüben.

Gemäß der US-A - 4,001,186 eignen sich Alkalimetallalkoholate ebenfalls als Polymerisationsbeschleuniger. Es wird erwähnt, daß diese Stoffe nicht nur eine Reaktionsführung bei niedrigerer Temperatur erlauben, sondern auch unerwünschte Nebenreaktionen unterdrücken.

Die Erfindung stellt sich die Aufgabe, ein Verfahren zur Herstellung neuer Homopolyimide mit Struktureinheiten der eingangs beschriebenen Art bereitzustellen, die die oben genannten Nachteile der bekannten Homopolyimide nicht aufweisen, sich also insbesondere zu Fasern und Formkörpern mit einer ähnlich guten Strukturfestigkeit verarbeiten lassen, wie sie von Mischpolyimiden bekannt ist, wobei diese neuen Homopolyimide keine verminderte Thermostabilität im Vergleich zu Mischpolyimiden aufweisen sollen.

Diese Aufgabe wird erfindungsgemäß dadurch gelöst, daß die an sich bekannte Umsetzung des 3,3'-4,4'-Benzophenontetracarbonsäuredianhydrids mit dem Toluylendiisocyanat in Gegenwart eines Polymerisationsbeschleunigers, ausgewählt aus Alkalimetallalkoholaten, Phospholen-, Phospholan- oder Phosphetanderivaten, durchgeführt wird.

Es hat sich gezeigt, daß die Polymerisation in Gegenwart des Polymerisationsbeschleunigers nicht nur schneller verläuft, sondern auch zu neuen Homopolyimiden mit einem höheren Molekulargewicht führt. Offenbar werden bei der Reaktionsführung ohne Polymerisationsbeschleuniger durch die längere Reaktionszeit unerwünschte Nebenreaktionen begünstigt, die zu einem Einbau von Nebenprodukten in die Polyimidkette führen. Es wird angenommen, daß diese Nebenreaktionen ursächlich mit der schlechten Strukturfestigkeit des bekannten Homopolyimids zusammenhängen.

Die Erfindung betrifft somit ein Verfahren zur Herstellung von neuen, schwer entflammbaren, thermostabilen Homopolyimiden mit Struktureinheiten der allgemeinen Formel 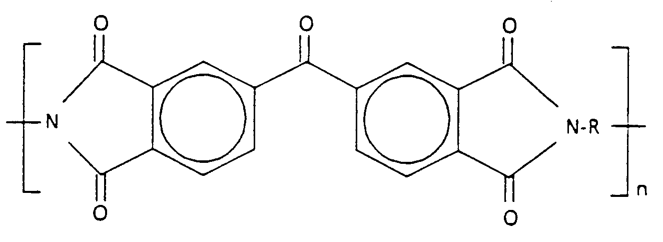
worin n eine ganze Zahl größer als 1 bedeutet und R für eine Gruppe der Formel(n) 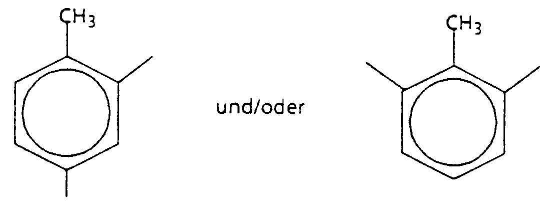
steht, durch Umsetzen von 3,3',4,4'-Benzophenontetracarbonsäuredianhydrid mit einer insgesamt äquimolaren Menge von 2,4- und/oder 2,6-Toluylendiisocyanat, dadurch gekennzeichnet, daß die Umsetzung in Gegenwart eines Polymerisationsbeschleunigers, ausgewählt aus Alkalimetallalkoholaten, Phospholen-, Phospholan- oder Phosphetanderivaten, durchgeführt wird.
und ferner Schwer entflammbare, thermostabile Homopolyimide mit Struktureinheiten der allgemeinen Formel 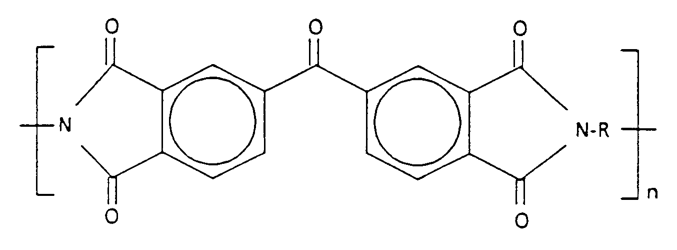
worin n eine ganze Zahl größer als 1 bedeutet und R für eine Gruppe der Formel(n) 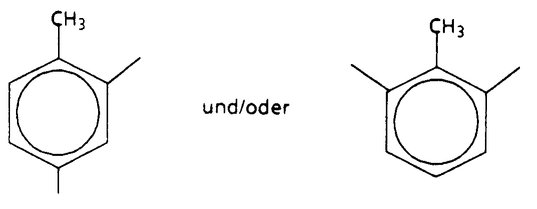
steht, mit einem Glasumwandlungspunkt von mindestens 320°C.

Als Polymerisationsbeschleuniger hat sich insbesondere ein Gemisch aus 1,3-Dimethyl-2-phospholen-1-oxid und 1,3-Dimethyl-3-phospholen-1-oxid als besonders effektiv erwiesen.

Eine weitere Ausführungsform des erfindungsgemäßen Verfahrens besteht darin, daß statt des Toluylendiisocyanates 2,4- und/oder 2,6-Toluylendiamin eingesetzt wird.

Vorteilhaft wird der Polymerisationsbeschleuniger in einer Menge von 0,1 bis 100 mMol pro Mol Toluylendiisocyanat bzw. Toluylendiamin verwendet.

Bei Verwendung des Toluylendiisocyanats wird das erfindungsgemäße Verfahren am besten in einem dipolaren aprotischen Lösungsmittel bei einer Temperatur zwischen 50 und 120°C, vorzugweise zwischen 70 und 100°C, durchgeführt. Als Lösungsmittel eignen sich beispielsweise Dimethylformamid, Dimethylsulfoxid, Dimethylacetamid, N-Methyl-2-pyrrolidon, Tetramethylharnstoff und Hexamethylphosphorsäure. Bei Verwendung von Toluylendiamin wird in einem inerten organischen Lösungsmittel gearbeitet. Die Menge an Lösungsmittel sollte so gewählt werden, daß die fertige Polyimidlösung einen Polyimidgehalt zwischen 15 und 40 Gew.% aufweist.

Das Fortschreiten der Reaktion kann sehr gut IR-spektroskopisch verfolgt werden, wobei es sich als günstig erwiesen hat, wenn die Umsetzung unmittelbar nach Verschwinden der IR-spektroskopisch beobachtbaren Anhydrid-Absorption oder der NCO-Absorption abgebrochen wird.

Da während der Reaktion CO₂ abgespalten wird, kann der Verlauf der Polykondensation auch an der Gasentwicklung beobachtet werden.

Nach Beendigung der Reaktion wird eine viskose Lösung erhalten, aus der die neuen Homopolyimide durch Aceton, Tetrahydrofuran oder Isopropanol ausgefällt werden können. Diese neuen Homopolyimide besitzen einen Glasumwandlungspunkt von mindestens 320°C.

Am hohen Glasumwandlungspunkt zeigen sich bereits die ausgezeichneten thermischen Eigenschaften der erfindungsgemäßen Homopolyimide. Sie besitzen sogar eine höhere Thermostabilität als die bekannten Mischpolyimide, hergestellt aus BTDA und TDI/MDI-Gemischen, oder den bekannten Homopolyimiden.

Die Erfindung betrifft auch Formkörper, die aus den erfindungsgemäßen Homopolyimiden durch Heißpressen hergestellt werden können. Sie besitzen einen LOI-Wert (limited oxygen index) zwischen 36 und 41 und eine praktisch gleich gute Strukturfestigkeit wie Formkörper aus Mischpolyimiden.

Die oben genannte viskose Lösung der erfindungsgemäßen Homopolyimide kann weiters direkt zu Fasern verarbeitet werden, wobei beispielsweise das in der AT-B - 377.016 beschriebene Trockenspinnverfahren angewendet werden kann.

Die erfindungsgemäßen Fasern besitzen nach einer Verweilzeit von 1.000 h bei 250°C eine Restfestigkeit von mindestens 70 %. Ihr Gewichtsverlust beträgt selbst nach dreistündigem Erhitzen auf 450°C nur maximal 40%.

Die Erfindung wird anhand der nachfolgenden Ausführungsbeispiele noch näher erläutert, wobei im Beispiel 1 die Herstellung der erfindungsgemäßen Homopolyimide sowie deren Verarbeitung zu Prüfstäben und im Beispiel 2 die Verarbeitung einer Lösung der erfindungsgemäßen Homopolyimide zu Fasern beschrieben ist. Um die Wirkung des erfindungsgemäß eingesetzten Polymerisationsbeschleunigers zu dokumentieren, wurden beide Beispiele auch ohne Zugabe des Polymerisationsbeschleunigers durchgeführt, deren Ergebnisse in den Tabellen der jeweiligen Vergleichsbeispiele 1 und 2 aufscheinen.

### Beispiel 1:

In einem 1000 ml Kolben mit Rührer, Rückflußkühler, Thermometer und Stickstoffspülung wurden 161 g (0,5 mol) Benzophenon-3,3'-4,4'-tetracarbonsäuredianhydrid und 0,2 g (0,005 mol) Natriummethylat in 816 g trockenem DMF gelöst. Die Reaktionsmischung wurde auf 80°C erwärmt, und unter konstantem Rühren wurden unter Stickstoffatmosphäre 87 g (0,5 mol) Toluylendiisocyanat (2,4- und/oder 2,6-Isomeres) innerhalb von vier Stunden zugetropft. Die Polykondensationslösung wurde danach bis zur Beendigung der CO₂-Entwicklung eine Stunde bei 80°C weitergerührt.

Es erfolgte ein rascher Abbruch der Reaktion, sobald IR-spektroskopisch keine freien Anhydrid- bzw. Isocyanatgruppen mehr nachgewiesen werden konnten.

Die fertige Polykondensationslösung wies eine inherente Viskosität (c = 0,25 g/dl bei 25°C in DMF/1 % LiBr) von 48 ml/g auf. Durch Zugabe von Aceton wurde das Polyimid ausgefällt, der Niederschlag abfiltriert, gewaschen und getrocknet. Die Ausbeute betrug 96 % der Theorie. Die Glasübergangstemperatur des Pulvers lag bei 325°C.

Aus dem Polyimidpulver wurden Prüfstäbe der Größe 120 x 15 x 5 mm durch Heißpressen hergestellt. Es wurde eine 30 Tonnen-Presse verwendet, die mit einem Satz von 300 x 300 mm großen beheizten Preßplatten ausgestattet war. In der Tabelle 1 (linke Spalte) sind die Preßbedingungen und die physikalischen Eigenschaften der aus dem erfindungsgemäßen Homopolyimid hergestellten Prüfstäbe zusammengefaßt.

Zum Vergleich wurden Prüfstäbe aus einem Mischpolyimid (BTDA + 80% TDI + 20 % MDI) gepreßt, dessen Herstellung in der US-A - 3,708,458 beschrieben ist. Die Testergebnisse sind in der rechten Spalte der Tabelle 1 wiedergegeben, wobei ersichtlich ist, daß das Mischpolyimid einen deutlich niedrigeren Glaserweichungspunkt (TG) besitzt und daß die Strukturfestigkeit des aus dem erfindungsgemäßen Homopolyimid hergestellten Prüfstabes gleich gut ist wie jene des Prüfstabes aus dem Mischpolyimid.

**Tabelle 1**

| | Prüfstab aus Homopolyimid (BTDA + TDI) | Prüfstab aus Mischpolyimid (BTDA + 80 % TDI + 20 % MDI) |
|---|---|---|
| Preßbedingungen | | |
| Gewicht | 4,5 g | 4,5 g |
| Temperatur der Drucktafel | 340°C | 340°C |
| Vorheizzeit | 2 min | 2 min |
| Preßkraft | 350 kg/cm² | 350 kg/cm² |
| Zeit, während der der Prüfling bei Preßtemperatur gehalten wird | 20 min | 20 min |
| Temperatur nach 15 min Abkühlen | 260 °C | 260°C |
| Qualität | in Ordnung | in Ordnung |

| Eigenschaften | | |
|---|---|---|
| Biegefestigkeit DIN 53 452 | 165 N/mm² | 165 N/mm² |
| Modul | 3.800 N/mm² | 3.800 N/mm² |
| Randfaserdehnung DIN 534 550 | 5,5 % | 5,5 % |
| Anzahl der Preßlinge | 5 | 5 |
| LOI | 36 - 41 | 36 - 38 |
| TG*1 | 325°C | 315°C |

| | | |
|---|---|---|
| *1 gemessen mit einem Thermal-Analysis-Gerät der Firma Perkin Elmer mittels Differential-Scanning-Calorimetry (DSC 4) in N₂-Atmosphäre, Aufheizrate 20°C/min | | |

### Vergleichsbeispiel 1:

In einem 1 000 ml-Kolben mit Rührer, Rückflußkühler, Thermometer und Stickstoffspülung wurden 161 g (0,5 mol) Benzophenon-3,3'-4,4'-tetracarbonsauredianhydrid in 816 g trockenem DMF gelöst. Die Lösung wurde auf 80°C erwärmt, und unter konstantem Rühren unter Stickstoffatmosphäre wurden 87 g (0,5 mol) Toluylendiisocyanat (2,4- und/oder 2,6-Isomeres) innerhalb von vier Stunden zugetropft. Die Polykondensationslösung mußte danach noch drei Stunden bei 80°C weitergerührt werden, da nach einer Stunde Nachrührzeit noch freie Isocyanatgruppen im IR-Spektrum nachgewiesen werden konnten.

Die fertige Polykondensationslösung wies eine inherente Viskosität (c = 0,25 g/dl bei 25°C in DMF/1 % LiBr) von 35 ml/g auf. Durch Zugabe von Aceton wurde das Polyimid ausgefällt, der Niederschlag abfiltriert, gewaschen und getrocknet. Die Ausbeute betrug 74 % der Theorie.

Aus dem Polyimidpulver wurden Prüfstäbe der Größe 120 x 15 x 5 mm durch Heißpressen hergestellt. Die verwendete hydraulische 30 Tonnen-Presse war mit einem Satz von 300 x 300 mm großen beheizten Preßplatten ausgestattet.

In der Tabelle 2 sind die Preßbedingungen und physikalischen Eigenschaften der Prüfstäbe zusammengefaßt.

**Tabelle 2**

| Preßbedingungen | |
|---|---|
| Gewicht | 4,5 g |
| Temperatur der Drucktafel | 340°C |
| Vorheizzeit | 2 min |
| Preßkraft | 350 kg/cm² |
| Zeit, während der der Prüfling bei Preßtemperatur gehalten wird | 20 min |
| Temperatur nach 15 min Abkühlen | 260°C |
| Qualität | schlecht |

| Eigenschaften | |
|---|---|
| Biegefestigkeit DIN 53 452 | 85 N/mm² |
| Modul | 3230 N/mm² |
| Randfaserdehnung DIN 534 550 | 3 % |
| Anzahl der Preßlinge | 5 |
| LOI | 36 - 38 |
| Tg*1 | 315°C |

| | |
|---|---|
| *1 wie oben | |

### Beispiel 2:

In einem Kleinreaktor aus Edelstahl mit Rührer, Rückflußkühler, Thermofühler und Stickstoffspülung wurden 5.928 g (18,4 mol) Benzophenon-3,3′-4,4′-tetracarbonsäuredianhydrid und 7,5 g (0,19 mol) Natriummethylat in 22.500 g trockenem DMF gelöst. Die Reaktionsmischung wurde auf 80°C erwärmt, und unter konstantem Rühren wurden unter Stickstoffatmosphäre 3.204 g (18,4 mol) Toluylendiisocyanat (2,4- und/oder 2,6-Isomeres) innerhalb von sechs Stunden zugetropft. Die Zunahme der Viskosität der Lösung wurde über ein In-line-Viskosimeter verfolgt. Nach Zugabe der gesamten Menge Diisocyanat wurde bis zur Beendigung der CO₂-Entwicklung eine Stunde lang bei 80°C weitergerührt. Im IR-Spektrum konnten dann keine freien Anhydrid- oder Isocyanatgruppen mehr nachgewiesen werden.

Die fertige Polykondensationslösung wies eine inherente Viskosität (c = 0,25 g/dl bei 25°C in DMF/1 % LiBr) von 46 bis 52 ml/g auf. Aus dieser Polykondensationslösung wurden nach dem in der AT-B - 377.016 beschriebenen Trockenspinnverfahren Fasern hergestellt. Die Eigenschaften der erfindungsgemäßen Polytoluylenbenzophenontetracarbonsäureimid-Faser im Vergleich zu einer nach demselben Trockenspinnverfahren hergestellten Mischpolyimidfaser (BTDA + 80 % TDI + 20 % MDI) sind in Tabelle 3 dargestellt:

**Tabelle 3**

| | Faser aus Homopolyimid (BTDA + TDI) | Faser aus Mischpolyimid (BTDA + 80 % TDI + 20 % MDI) |
|---|---|---|
| Endfasertiter | 2,2 dtex | 2,2 dtex |
| Festigkeit | 30 cN/tex | 30 cN/tex |
| Dehnung | 25 - 30 % | 25 - 30 % |
| Restfestigkeit nach 1000 h bei 250°C in Luft *2 | 70 % | 50 % |
| Gewichtsverlust nach 3 h bei 450°C in Luft | 40 % | 60 % |
| LOI | 36 - 41 | 36 - 38 |
| TG*1 | 325°C | 315°C |

| | | |
|---|---|---|
| *1 wie oben | | |
| *2 gemessen mit einem Thermal-Analysis-Gerät der Firma Perkin Elmer mittels Thermogravimetric-Analysis (TGS 2) in Luft | | |

### Vergleichsbeispiel 2:

In einem Kleinreaktor aus Edelstahl mit Rührer, Rückflußkühler, Thermofühler und Stickstoffspülung wurden 5.928g (18,4 mol) Benzophenon-3,3′-4,4′-tetracarbonsäuredianhydrid in 22.500 g trockenem DMF gelöst. Die Reaktionsmischung wurde auf 80°C erwärmt, und unter konstantem Rühren wurden unter Stickstoffatmosphäre 3.204g (18,4 mol) Toluylendiisocyanat (2,4- und/oder 2,6-Isomeres) innerhalb von sechs Stunden zugetropft. Die Zunahme der Viskosität der Lösung wurde über ein In-line-Viskosimeter verfolgt. Nach Zugabe der gesamten Menge Diisocyanat mußte noch 5 Stunden bei 80°C weitergerührt werden, bis im IR-Spektrum keine Isocyanatgruppen mehr nachgewiesen werden konnten.

Die fertige Polykondensationslösung wies eine inherente Viskosität (c = 0,25 g/dl bei 25°C in DMF/1 % LiBr) von 34 bis 38 ml/g auf. Aus dieser Polykondensationslösung wurden nach dem in der AT-B - 377.016 beschriebenen Spinnverfahren Fasern hergestellt. Die Eigenschaften dieser Polytoluylenbenzophenontetracarbonsäureimid-Fasern sind in Tabelle 4 dargestellt:

**Tabelle 4**

| | |
|---|---|
| Endfasertiter | 2,2 dtex |
| Festigkeit | 25 cN/tex |
| Dehnung | 23 - 28 % |
| Restfestigkeit nach 1000 h bei 250°C in Luft *2 | 50 % |
| Gewichtsverlust nach 3 h bei 450°C in Luft | 60 % |
| LOI | 36 - 38 |
| TG*1 | 315 °C |

| | |
|---|---|
| *1 wie oben | |
| *2 wie oben | |

## Patentansprüche

1. Verfahren zur Herstellung von neuen, schwer entflammbaren, thermostabilen Homopolyimiden mit Struktureinheiten der allgemeinen Formel 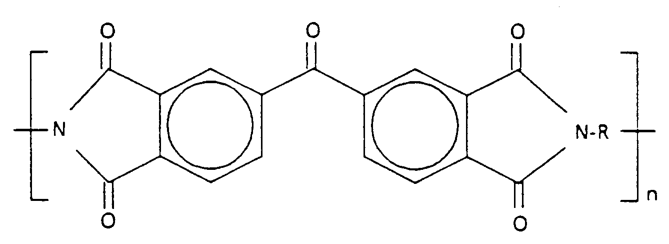 worin n eine ganze Zahl größer als 1 bedeutet und R für eine Gruppe der Formel(n) 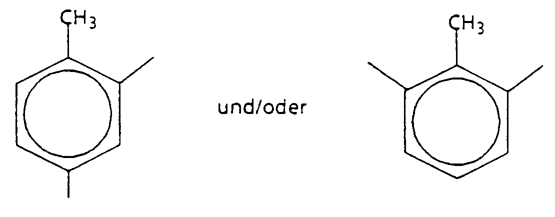 steht, durch Umsetzen von 3,3',4,4'-Benzophenontetracarbonsäuredianhydrid mit einer insgesamt äquimolaren Menge von 2,4- und/oder 2,6-Toluylendiisocyanat, dadurch gekennzeichnet, daß die Umsetzung in Gegenwart eines Polymerisationsbeschleunigers, ausgewählt aus Alkalimetallalkoholaten, Phospholen-, Phospholan- oder Phosphetanderivaten, durchgeführt wird.

2. Verfahren nach Anspruch 1, dadurch gekennzeichnet, daß als Polymerisationsbeschleuniger ein Gemisch aus 1,3-Dimethyl-2-phospholen-1-oxid und 1,3-Dimethyl-3-phospholen-1-oxid verwendet wird.

3. Verfahren nach Anspruch 1, dadurch gekennzeichnet, daß statt des Toluylendiisocyanates 2,4- und/oder 2,6-Toluylendiamin eingesetzt wird.

4. Verfahren nach einem der Ansprüche 1 bis 3, dadurch gekennzeichnet, daß der Polymerisationsbeschleuniger in einer Menge von 0,1 bis 100 mMol pro Mol Toluylendiisocyanat bzw. Toluylendiamin verwendet wird.

5. Verfahren nach Anspruch 1, dadurch gekennzeichnet, daß die Umsetzung in einem dipolaren, aprotischen Lösungsmittel bei einer Temperatur zwischen 50 und 120°C, vorzugsweise zwischen 70 und 100°C durchgeführt wird.

6. Verfahren nach Anspruch 1 oder Anspruch 3, dadurch gekennzeichnet, daß die Umsetzung unmittelbar nach Verschwinden der IR-spektroskopisch beobachtbaren Anhydrid-Absorption oder der NCO-Absorption abgebrochen wird.

7. Schwer entflammbare, thermostabile Homopolyimide mit Struktureinheiten der allgemeinen Formel 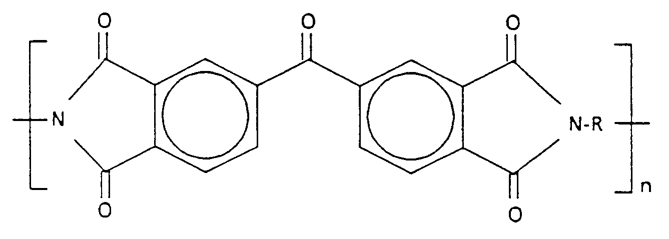 worin n eine ganze Zahl größer als 1 bedeutet und R für eine Gruppe der Formel(n) 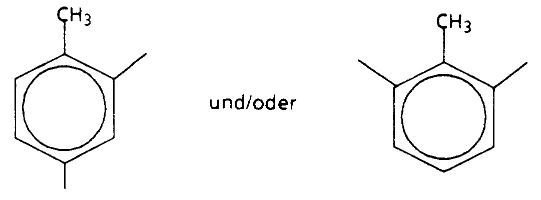 steht, erhältlich nach einem der Ansprüche 1 bis 6, mit einem Glasumwandlungspunkt von mindestens 320°C.

8. Formkörper erhältlich durch Heißpressen eines Homopolyimidpulvers gemäß Anspruch 7.

9. Fasern aus Homopolyimiden nach Anspruch 7, welche nach einer Verweilzeit von 1.000 h bei 250°C eine Restfestigkeit von mindestens 70% besitzen.

## Claims

1. Process for the preparation of new thermally stable homopolyimides of low flammability with structural units of the general formula: 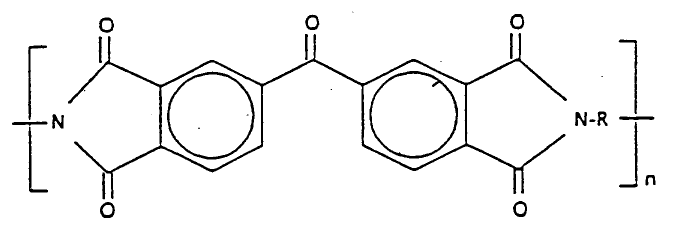 where n is an integer greater than 1 and R stands for a group of the formula(e) 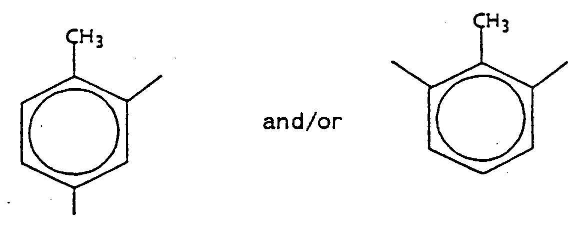 by the reaction of benzophenone-3,3', 4,4'-tetracarboxylicacid dianhydride with altogether an equimolar amount of 2,4- and/or 2,6-toluylene diisocyanate, characterised In that, the reaction is carried out in the presence of a polymerisation accelerator chosen from alkali metal alcoholates, and phospholene-, phospholane- or phosphetane derivatives.

2. Process in accordance with Claim 1, characterised in that, a mixture of 1,3-dimethyl-2-phospholene-1-oxide and 1,3-dimethyl-3-phospholene-1-oxide is used as polymerisation accelerator.

3. Process in accordance with Claim 1, characterised in that, 2,4- and/or 2,6-toluylene diamine is used instead of toluylene diisocyanate.

4. Process in accordance with one of the Claims 1 to 3, characterised in that, the polymerisation accelerator is used in an amount from 0.1 to 100 mMol per Mol toluylene diisocyanate or toluylene diamine respectively.

5. Process in accordance with Claim 1, characterised in that, the reaction is carried out in a dipolar aprotic solvent at a temperature between 50 and 120 °C, preferably between, 70 and 100 °C.

6. Process In accordance with Claim 1 or 3, characterised in that, the reaction is discontinued immediately after the disappearance of the anhydride absorption or the NCO absorption observed in the IR spectrum.

7. Thermally stable homopolyimides of low flammability with structural units of the general formula 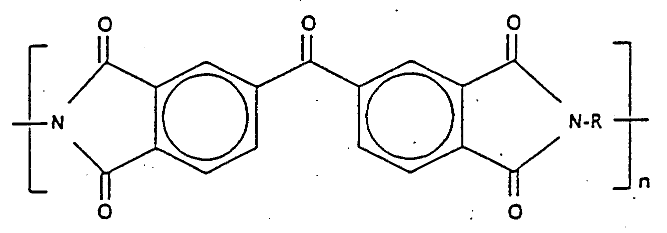 where n is an integer greater than 1 and R stands for a group of the formula(e) 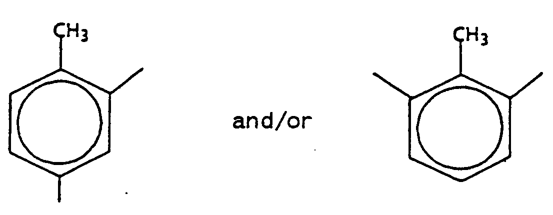 obtained in accordance with one of the Claims 1 to 6, with a glass transition point of at least 320 °C.

8. Mouldings obtained by hot pressing a homopolyimide powder according to Claim 7.

9. Fibres of homopolyimides In accordance with Claim 7, which have a residual strength of at least 70% after a dwell time of 1,000 hours at 250 °C.

## Revendications

1. Procédé de préparation de nouveaux homopolyimides thermostables, difficilement inflammables, à unités de structure de la formule générale suivante : 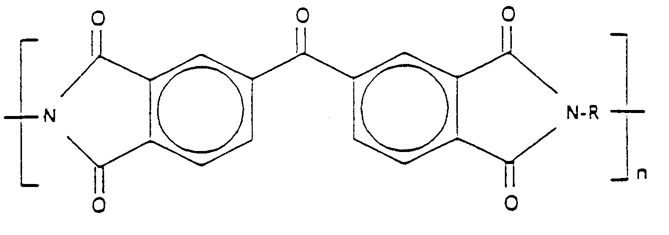 dans laquelle n représente un nombre entier supérieur à 1 et R représente un radical de la ou des formules : 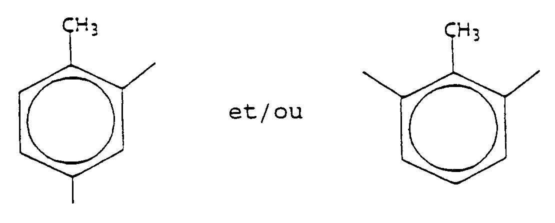 par la réaction du dianhydride de l'acide 3,3',4,4'-benzophénonetétracarboxylique avec une proportion au total équimolaire de diisocyanate de 2,4- et/ou 2,6-toluylène, caractérisé en ce que l'on entreprend la réaction en présence d'alcoolates de métaux alcalins, de dérivés du phospholène, du phospholane ou du phosphétane.

2. Procédé selon la revendication 1, caractérisé en ce qu'à titre d'accélérateur de polymérisation, on utilise un mélange constitué de 1,3-diméthyl-2-phospholène-1-oxyde et de 1,3-diméthyl-3-phospholène-1-oxyde.

3. Procédé selon la revendication 1, caractérisé en ce qu'au lieu du diisocyanate de toluylène, on utilise la 2,4- et/ou 2,5-toluylènediamine.

4. Procédé selon l'une quelconque des revendications 1 à 3, caractérisé en ce que l'on utilise l'accélérateur de polymérisation en une proportion de 0,1 à 100 mmoles par mole de diisocyanate de toluylène ou de toluylènediamine.

5. Procédé selon la revendication 1, caractérisé en ce que l'on entreprend la réaction dans un solvant dipolaire et aprotique à une température comprise entre 50 et 120°C, de préférence entre 70 et 100°C.

6. Procédé selon la revendication 1 ou la revendication 3, caractérisé en ce que l'on interrompt la réaction immédiatement après la cessation de l'absorption d'anhydride ou de l'absorption de NCO constatable par spectroscopie infrarouge.

7. Homopolyimides thermostables, difficilement inflammables, avec des unités de structure de la formule générale suivante : 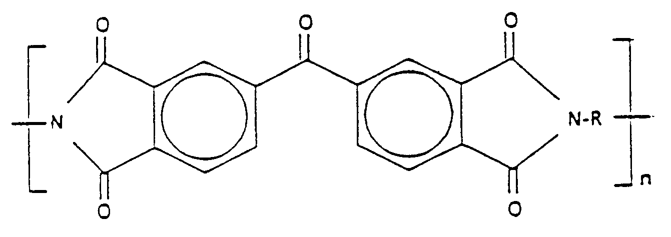 dans laquelle n représente un nombre entier supérieur à 1 et R représente un radical de la ou des formules : 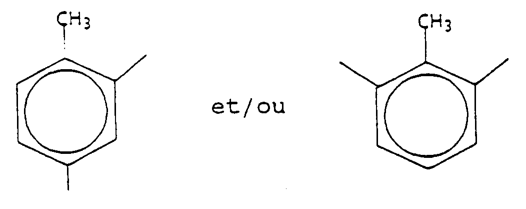 que l'on peut obtenir selon l'une quelconque des revendications 1 à 6, et qui possèdent un point ou température de transition vitreuse d'au moins 320°C.

8. Articles moulés obtenus par compression à chaud d'une poudre d'homopolyimide selon la revendication 7.

9. Fibres en homopolyimides selon la revendication 7, qui possèdent une solidité résiduelle d'au moins 70% après un séjour de 1000 heures à 250°C.
